# EUROPEAN PATENT APPLICATION

(11) **EP 0 619 939 A2**
(43) Date of publication of application: **19.10.1994**
(21) Application number: 94610017.9
(22) Date of filing: 24.03.1994
(51) Int. Cl.: A01F 29/00

(54) **Machine for splitting up and spreading of straw bales**

(30) Priority: 31.03.1993 DK 187/93; 07.03.1994 DK 262/94
(71) Applicant: MASKINFABRIKKEN HERBORG A/S, DK-6900 Skjern (DK)
(72) Inventor: Christensen, Kurt, SIG DK-6800 Varde (DK); Horsevad, Michael, SIG DK-6800 Varde (DK)
(74) Representative: Hansen, Kaj

(57) **Abstract**

The machine comprises a container (1) which has a width a little larger than the width of a straw bale, and a length which preferably is shorter than the length of a straw bale. On each end of the the long side at the top of the container is swingably mounted fence organs, which can consist of a platform (3) with an end piece (5), between which end pieces a straw bale can be accommodated in the longitudinal direction, when the platforms (3) are in their horizontal position. Each platform (3) is by means of a swing arm (6) at the front end of the container (1) and a spring (7) coupled to a tilting arm (8), which at the centre of the container (1) comes to rest against a piston (10) which is movable in the vertical direction. The machine can be suspended in a tractor, and the piston (10) is part of a so-called PTO coupling (27). When the machine is lifted, the piston (10) is moved upwards whereby the platforms (3) are swung upwards to an inclined position (fig.2). In the bottom of the container (1) is mounted a rotatable disk (16), which is coupled to a gear arrangement (23), which is mounted on the underside of the container (1), and above a shaft (24) it is coupled to the PTO coupling (27), which is coupled to the power take off shaft of the tractor. On the upper side of the disk (16) is mounted stripping irons (19), which for example can be located in a helical pattern over the disk (16). Between the stripping irons (19) can be mounted driving pins (21) for the disk (16). At the rear end of the machine the part of the disk (16) which rotates in the direction out of the machine is fitted with spreading organs, which can consist of a series of holding-up irons (28), which are adjustably mounted in a beam (29,30), which is swingably suspended from pins (33) and actuated by a compression spring (35) in a direction opposite to the direction of rotation of the disk (16).

By means of the machine a straw bale can be stripped and spread without the straw having to be cut. The machine is simple of construction and therefore cheap to produce. Furthermore, it has a comparatively low power consumption.

## Description

The present invention relates to a machine for the cutting up and spreading of straw bales, large-size straw bales in particular.

The machine is preferably used for the spreading of straw in cattle yards.

Up to now the straw has been spread manually. This is very time consuming work, and quite often a straw bale is not thoroughly split up, but scattered in flakes with a consequent large consumption of straw.

Furthermore, a machine is on the market, which cuts the straw and blows it rearwards over a large area behind the machine. These known machines are complicated of construction and therefore expensive to produce, and they have a high power consumption and are therefore expensive in operation. In many cattle yards the indoor climate makes it necessary that two opposite outer walls are constructed as partly open structures to facilitate draught in the cattle shed. Cut-up straw material will therefore blow away before it can settle down.Cut-up straw also has several undesirable characteristics compared with ordinary straw. These known machines are therefore not well suited for cattle yards.

It is the purpose of the present invention to describe a machine which can split up and spread a straw bale without cutting the straw. This is achieved by embodying the machine as described in the characterizing part of claim 1.

The machine according to the invention is of simple construction and therefore cheap to produce. It has a low power consumption and is therefore cheap in operation. Furthermore, it is easy to operate.

Claim 2 deals with a special embodiment of the fence organs for a machine according to the invention.

Claim 3 deals with special means which ensure that the power transmission to the tilting function of the fence organs is elastic.

Claim 4 deals with other means with which to damp down the power transmission to the tilting function of the fence organs.

Claim 5 deals with a special embodiment of the machine so that it can be mounted on a tractor.

Claim 6 deals with a preferred positioning of the stripping irons on the rotating disk for a machine according to the invention.

Claim 7 deals with a preferred embodiment of the stripping irons for a machine according to the invention.

Claim 8 deals with special driving studs mounted on the rotating disk for a machine according to the invention, and

Claim 9 deals with a preferred embodiment of the spreading organs for a machine according to the invention.

The invention is explained in detail below with reference to the drawing in which
- fig. 1: is a schematic front view of a machine according to the invention in which the fence organs are in their initial position,

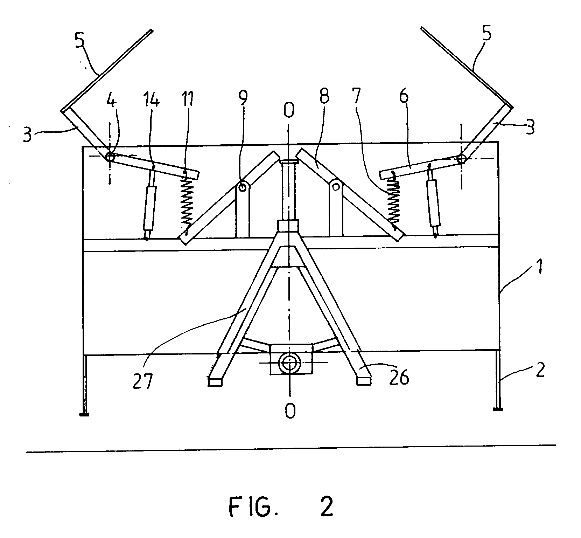

- fig. 2: is an illustration showing the machine's fence organs in their terminal position, corresponding to the illustration in fig. 1,
- fig. 3: is a schematic side view of the machine,
- fig. 4: is a schematic rear view, with certain parts not shown, of the machine with a straw bale in position.
- fig. 5: is an illustration corresponding to the one in fig. 4 in which the binder twine in the straw bale is cut and the middle part of the straw bale has sunk into the machine's container,
- fig. 6: is an illustration corresponding to the ones shown in figs. 4 and 5 in which the machine's fence organs are in their terminal position,

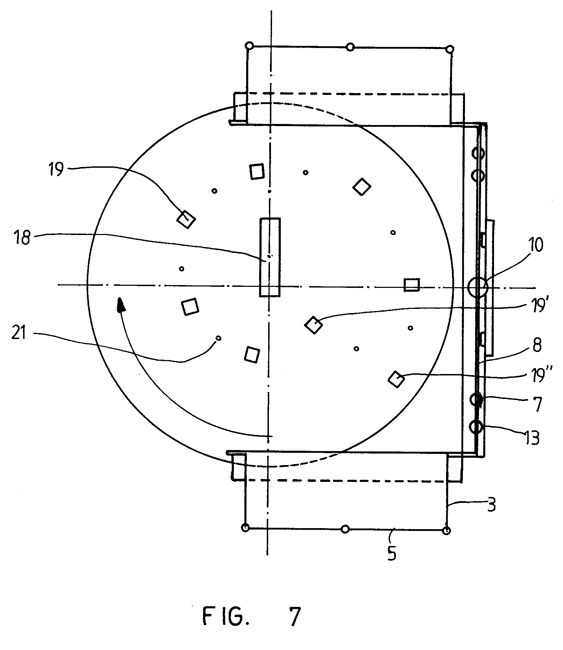

- fig. 7: is a schematic top view of the machine's rotating disk,
- fig. 8: is a front view of the spreading organs of a machine according to the invention, and
- fig. 9: shows a section after the line I-I in fig 8.

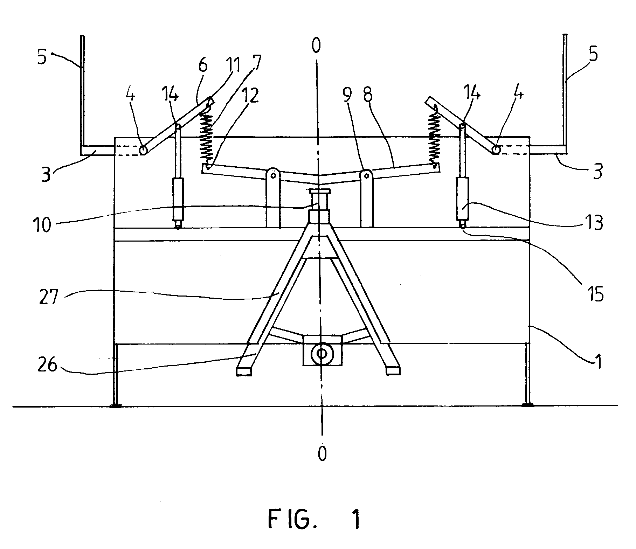

As shown in fig. 1 a machine according to the invention comprises a container 1 which can stand on the ground on legs 2. The container 1 is a little wider and a little shorter than a straw bale. A large-size straw bale measures 120x120x250 cm.

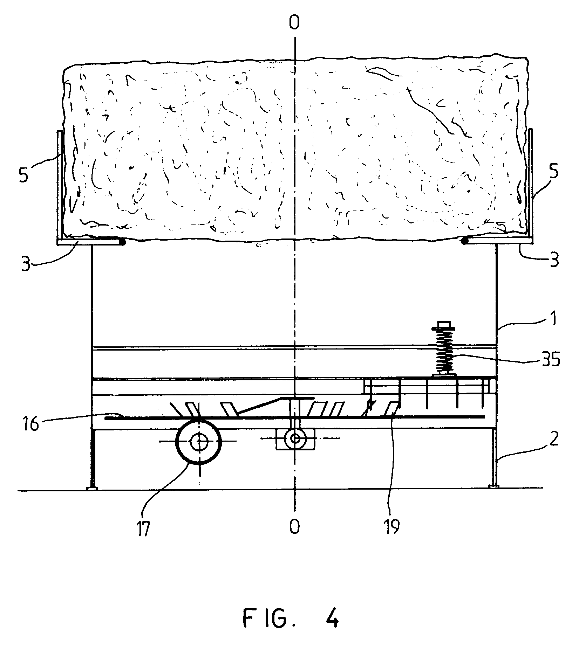

At the top of the container 1 are mounted fence organs for a straw bale, which as shown in the illustration can be embodied as two uniform platforms 3, which each is swingably hinged on a pin 4 to the container 1. The pins are located on the top of the container 1 near each end of the container and at the same distance from a vertical centre plane O-0 through the machine. The two platforms 3 are preferably of the same length, and each platform is embodied with an end piece 5. When the platforms 3 are in their horizontal position it is possible, as shown in fig. 4, for a straw bale to be accommodated between the end pieces 5 and come to rest on the platforms 3 with its centre portion in the machine's central plane 0-0.

As shown in fig. 1 each pin 4 is at the front end of the ma-machine taken through the wall of the container 1 and there attached in a fixed position to one end of a tilting arm 6 whose other end by means of a link 7 is link-connected to one end of a tilting arm 8, which by means of a stud (9) is swingably hinged to the container 1 and at the other end at the centre portion of the container 1 comes to rest against a piston 10.

The link connection 7 can also, as shown in the drawing, be a tension spring which by means of studs 11 an 12 are connected to the arms 6 and 8, respectively.

As shown in the drawing each arm 6 can be coupled to a damper cylinder 13, which is swingably hinged to the arm 6 by a pin 14 and to the container 1 by a pin 15. As appears from figs. 4-6 the bottom of the container 1 is fitted with a turnable disk 16, which on the rear side can be supported by a roller 17.

On the top side near its centre the disk 16 is embodied with a distance piece 18 which can keep the middle portion of the underside of the straw bale at a distance from the disk 16. Furthermore, the top side of the disk 16 is fitted with a number of straw stripping irons 19 of which one 19' is an innermost one located close to the centre of the disk 16, and another 19'' is an outermost located close to the periphery of the disk 16. The stripping irons in between are located so that each successive stripping iron is located in a definite mutual angle and at an evenly increasing distance from the centre of the disk 16. The stripping irons can he embodied as flat bar irons oriented in an inclined position in relation to the disk 16 and are attached to the disk so that they can be turned at a desired angle in relation to the disk. At their upper end the stripping irons 19 can be embodied with an oblique edge 20. Equidistant between successive stripping irons 19 the disk 16 can carry driving pins 21 oriented in a slanting position in relation to the disk 16 leaning outwards towards the periphery of the disk 16. The driving pins 21 can be of cylindrical shape and have a sharp edge 22 at the top.

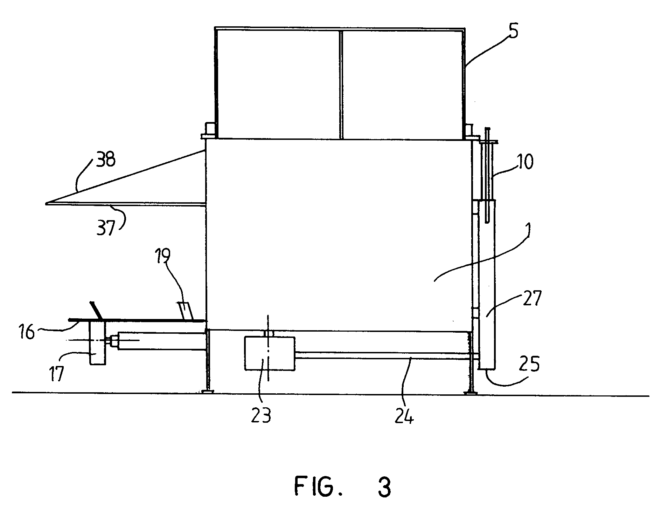

As shown in fig. 3 the disk 16 can be coupled to a gear arrangement 23 located under the container 1. The gears can, over a shaft 24 by means of a clutch 25, be coupled to a not shown power take off shaft of a tractor. The piston 10 can be part of a so-called PTO clutch in which one half unit 26 is suspended from a tractor's lift which, as shown in fig. 1, can be moved up into the mating half unit 27, which is mounted on the front of the machine's container 1, whereby the piston 10 is displaced upwards when the machine is lifted.

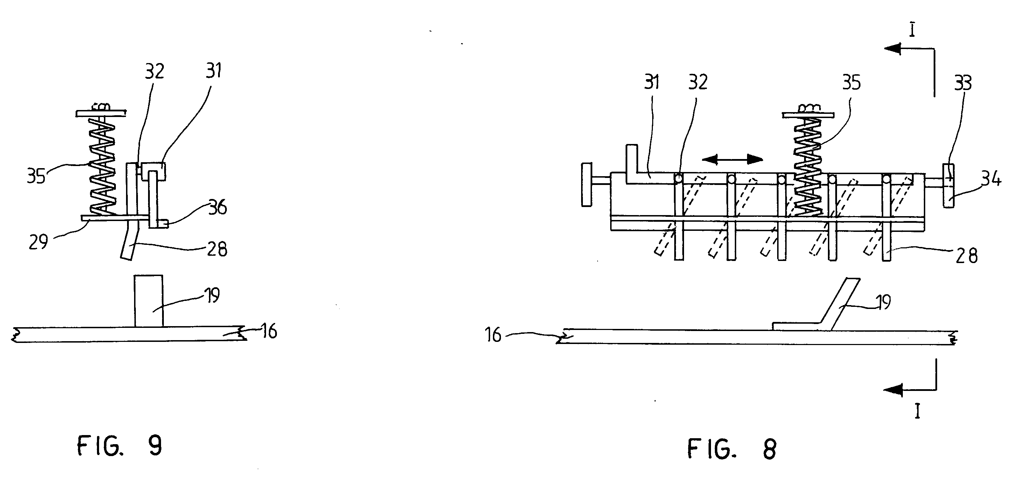

The machine according to the invention is embodied with spreading organs which as shown in figs. 4-6 can be embodied as a series of holding-up irons 28 located above the part of the disk 16 which rotates out of the machine, in an area reaching from the periphery of the disk 16 in the direction of a central plane 0-0 through the machine. As shown in figs. 8 and 9 the holding-up irons 28 can be located with their lower edge a short distance above the upper edge of the stripping irons 19. The stripping irons can be adjustably mounted. They can for example be loosely inserted through a horizontal lug 29 on a suspension beam 30. The top of the beam 30 is fitted with a slidable bar 31 to which each holding-up iron 28 is swingably attached by a pin 32. As shown the beam 30 may be swingable suspended at each end by a pin 33 in a bearing or bush 34 which is mounted on the container 1. The lug 29 is actuated in the downward direction by a compression spring 35, whereby it is turned to a position in which it comes to rest against a stop 36. By displacement of the bar 31 the holding-up irons 28 can be adjusted to a desired position.

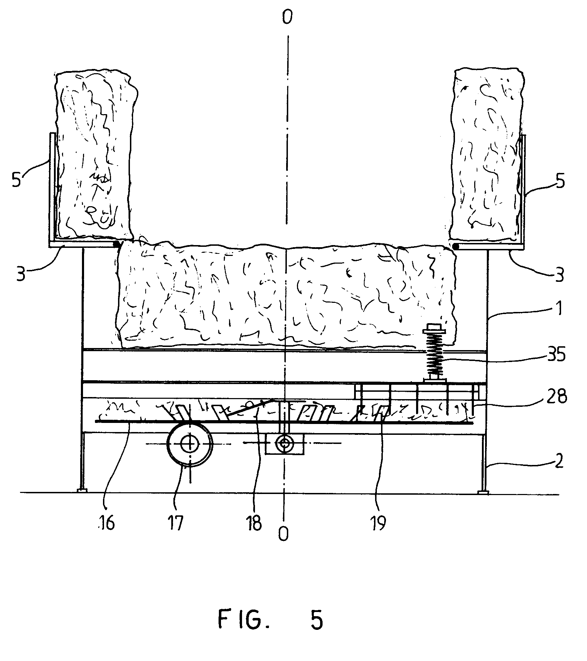

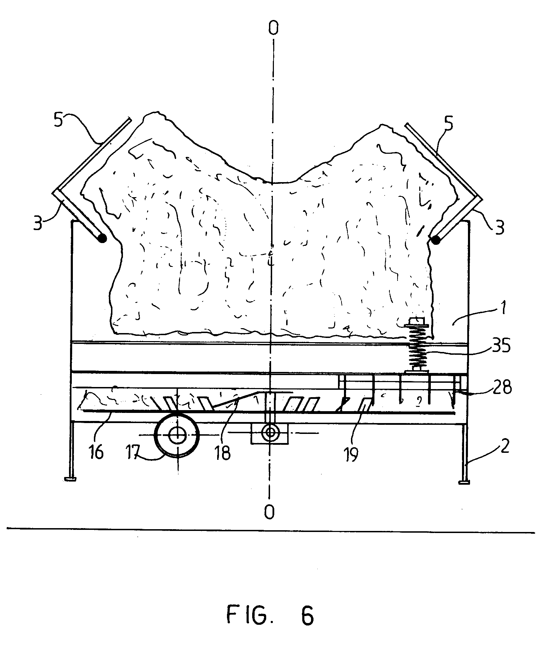

When the machine is in the initial position shown in fig. 4 and a straw bale is lifted up into the machine the binder twines are cut, whereby the centre portion of the straw bale, as shown in fig. 5, falls down into the machine. Then, when the machine is lifted the platforms 3, as shown in fig. 6, tilts over to a inclined position whereby the outer portions of the straw bale are tipped down into the container 1 of the machine. When the disk rotates the straw bale will successively be stripped from its lower side and upwards, and the straw will be spread rearwards and to the side of the machine.

As shown in fig. 3 the rear of the machine can be embodied with a protective bow-shaped bar and a belonging hood 38.

Within the scope of the invention other embodiments than those shown and described can be imagined. For example, both the fence organs and the spreading organs can be embodied and suspended in other ways. The machine could also be embodied for a type of straw bales other than large-size straw bales, for instance small straw bales.

## Claims

1. Machine for the cutting-up an spreading of straw bales, especially large-size straw bales, **characterized** in that the machine comprises a container (1), which has a width a little greater than the width of a straw bale and a length which preferably is shorter than the length of a straw bale, that the top of the container (1) is fitted with movable fence organs (3-8) against which a straw bale in an initial position can come to rest accurately on top of the container in a position in which the centre portion of the long side of a straw bale is in a position above the middle of the container (1), that the bottom of the container (1) is fitted with a turnable disk (16) which on its top side at the centre is embodied with a distance piece (18), which can keep the bottom of the centre portion of a straw bale at a distance from the disk, and with a number of straw stripping irons (19) distributed over the disk (16) in such a way that the whole bottom of a straw bale can be stripped, when the disk (16) rotates, and that the machine is embodied with spreading organs (28-34) which can spread the straw strippings rearward and to the side when the disk (16) rotates.

2. Machine according to claim 1 **characterized** in that the fence organs (3-8) are embodied as two preferably uniform platforms (3), which each is swingably hinged on a pin (4) each to its own end of the container (1), that each platform (3) is embodied with an end piece (5) and is of such a length that a straw bale can be accommodated in the longitudinal direction between the end pieces (5), and that each pin (4) is carried through the wall of the container (1) and at the front end of the container (1) attached on a fixed pivot to one end of a tilting arm (6), which at its other end by means of a link (7) is link-connected to one end of a tilting arm (8), which is swingably hinged to the container (1) on a pin (9) and at its other end, the one closest to the centre of the container (1), comes to rest against a vertically movable piston (10), whereby the platforms (3) can be moved from a horizontal initial position to a upward inclined terminal position.

3. Machine according to claim 3 **characterized** in that the link (7) consists of a tension spring connected to the arms (6) and (8) on pins (11) and (12), respectively.

4. Machine according to claims 2 and 3 **characterized** in that each arm (6) between the pins (4) and (11) by means of a pin (14) has a swingably coupled damper cylinder (13), which is swingably hinged to the container (1) on a pin (15).

5. Machine according to claims 1 and 2 **characterized** in that the machine can be suspended in a tractor, that the disk (16) is coupled to a gear arrangement (23) which is mounted on the underside of the container (1) and which via a shaft (24) by means of a claw clutch (25) can be coupled to the tractor's power take-off shaft, and that the piston (10) is part of a so-called PTO coupling and is in its bottom position, where the platforms (3) are in their horizontal initial position when the machine stands on the ground, but is moved up to its top position whereby the platforms (3) are moved up in an upward inclined terminal position, when the machine is lifted.

6. Machine according to claim 1 **characterized** in that the machine has an innermost (19') and an outermost (19'') stripping iron and a number of intermediary stripping irons (19), where each successive stripping iron (19) is located in a definite mutual angle and in an evenly increasing distance from the centre of the disk (16).

7. Machine according to claims 1 and 6 **characterized** in that the stripping irons (19) are embodied as flat iron bars, which can have an inclination in relation to and are adjustably fastened to the disk (16) and have an upper obliquely cut edge (20).

8. Machine according to claims 1 and 6 **characterized** in that the disk (16) midway between each stripping iron (19) is fitted with a cylindrical driving pin (21) of approximately the same height as the stripping irons (19), and which inclines outward towards the periphery of the disk (16) and at its top has a sharp edge (22).

9. Machine according to claim 1 **characterized** in that the spreading organs (28-35) are embodied as a series of holding-up irons (28) which are located above the disk (16) on the side of the disk which rotates in the direction out of the machine and which extends over an area of the disk (16) from the disk's periphery towards a centre plane (0-0) through the machine, and that the holding -up irons (28) are adjustably mounted at a mutual distance on a beam (29,30), which is swingable suspended on pins (33) in the container (1) and actuated by a compression spring (35) in the direction opposite to the direction of rotation of the disk (16).
